# EUROPÄISCHE PATENTSCHRIFT

(11) **EP 0 521 821 B1**
(45) Veröffentlichungstag und Bekanntmachung des Hinweises auf die Patenterteilung: **31.07.1996**
(21) Anmeldenummer: 92810462.9
(22) Anmeldetag: 16.06.1992
(51) Int. Cl.: F01L 3/02, F01L 3/04, B32B 15/01

(54) **Auslassventil einer Diesel-Brennkraftmaschine und Verfahren zum Herstellen des Ventils**
Exhaust valve of diesel internal combustion engine and manufacturing process thereof
Soupape d'échappement d'un moteur à combustion interne du type Diesel et son procédé de fabrication

(30) Priorität: 04.07.1991 CH 1982/91
(43) Veröffentlichungstag der Anmeldung: 07.01.1993
(73) Patentinhaber: NEW SULZER DIESEL AG, CH-8401 Winterthur (CH)
(72) Erfinder: Altorfer, Hans, CH-8370 Sirnach (CH)
(74) Vertreter: Hammer, Bruno, Dr.

(56) Entgegenhaltungen:
- FR-A- 2 341 039
- US-A- 4 758 480
- US-A- 4 867 116
- Engineering alloys vom Woldman (7.Auflage,1990)Seiten 639,640,644-646,871-873

## Beschreibung

Die Erfindung betrifft ein Auslassventil einer nach dem Dieselverfahren arbeitenden Hubkolbenbrennkraftmaschine sowie ein Verfahren zum Herstellen des Auslassventils.

Aus der US-PS 4 867 116 ist ein Auslassventil in Form eines Tellerventils für fremdgezündete Flugzeugmotoren bekannt, die Benzin als Treibstoff verwenden. Das Benzin enthält beträchtliche Mengen von Bleitetraäthyl und Aethylenbromid. Der Grundkörper des Ventils besteht aus einer warmfesten Nickelbasislegierung des Typs Nimonic 80A (Warenzeichen der Inco Alloys International Inc.). Wegen der Zusätze von Bleitetraäthyl und Aethylenbromid treten am Ventil an den Stellen, an denen das heisse Verbrennungsgas aufprallt, und zwar hauptsächlich an der Ventilstange oberhalb des Tellers, starke Korrosion und Erosion auf, die zu kerbförmigen Einschnitten an der Ventilstange führen. Um dem abzuhelfen, wird in der US-PS vorgeschlagen, an der gefährdeten Stelle der Ventilstange eine diese umgebende dünne Beschichtung aus einer relativ viel Aluminium enthaltenden Nickel- oder Titanlegierung anzubringen. Als weitere gefährdete Stelle des Ventils wird die im Brennraum des Zylinders befindliche Stirnfläche des Ventiltellers genannt, die ebenfalls zum Beschichten mit der aluminiumhaltigen Nickel- oder Titanlegierung empfohlen wird.

Die bekannten Auslassventile, auf die sich die Erfindung bezieht und die für Dieselmotoren bestimmt sind, bestehen als Ganzes ebenfalls aus der warmfesten Nickelbasislegierung Nimonic 80A (Warenzeichen). Obwohl diese Legierung wegen ihres hohen Chromgehaltes von zirka 20% eine gute Beständigkeit gegen hohe Temperaturbeanspruchungen aufweist, sind an Auslassventilen aus dieser Legierung bei erhöhter Leistung der Diesel-Brennkraftmaschine Korrosionsschäden an der Sitzfläche der Ventile aufgetreten. Diese Korrosion bildet in fortgeschrittenem Stadium tiefe Gräben in der Sitzfläche, was zum sogenannten lokalen Durchblasen von Verbrennungsgasen führt. Dies wiederum begünstigt wegen lokal erhöhter Temperatur eine weitere Korrosion. Die Ursache der Korrosion ist zur Hauptsache durch im Diesel-Brennstoff enthaltenes Vanadium und Natrium bedingt. Die Details dieser Korrosion sind bekannt. Enthält der Diesel-Brennstoff auch noch Schwefel, so wird die durch Vanadium und Natrium bedingte Korrosion durch Sulfidation noch verstärkt.

Der Erfindung liegt die Aufgabe zugrunde, ein Auslassventil für nach dem Dieselverfahren arbeitende Brennkraftmaschinen dahingehend zu verbessern, dass sein Widerstand an der Stitzfläche gegen im Dieselbrennstoff enthaltenes Vanadium, Natrium und gegebenenfalls Schwefel grösser ist als der von Nimonic 80A (Warenzeichen) bei gleichzeitig ausreichender Festigkeit sowohl des Ventilgrundkörpers als auch seiner Sitzpartie.

Erfindungsgemäss wird diese Aufgabe mit einem Ventil gelöst, das die Merkmale des unabhängigen Anspruchs 1 oder des unabhängigen Anspruchs 2 aufweist. Die im Anspruch 1 beanspruchte Legierungsvariante für die Sitzpartie ist unter der Bezeichnung Inconel 625 bekannt (= Warenzeichen der Inco Alloys International Inc.). Die im Anspruch 2 beanspruchte Legierungsvariante für die Sitzpartie ist unter der Bezeichnung Inconel 671 bekannt (= Warenzeichen der Inco Alloys International Inc.).

Es hat sich gezeigt, dass diese beiden Verbundkonstruktionen den Anforderungen an die Ventilsitzpartie am besten gerecht werden. Diese Anforderungen bestehen in guter Kriechfestigkeit, hoher Härte und guter Beständigkeit gegen Korrosion durch Vanadium und Natrium sowie gegebenenfalls Schwefel. Versuche haben ergeben, dass bei den Ventilen mit der erfindungsgemässen Verbundkonstruktion die Korrosionsrate wesentlich kleiner ist als bei den bisherigen Auslassventilen, die als Ganzes aus Nimonic 80A bestehen. Die Leistung von Brennkraftmaschinen, die mit den erfindungsgemässen Auslassventilen versehen werden, kann somit erhöht werden.

Die warmfeste Nickelbasislegierung des Grundkörpers kann die Zusammensetzung 0,04 bis 0,10 C, ≤1,0 Si, ≤0,2 Cu, ≤1,0 Fe, ≤1,0 Mn, 18,0 bis 21,0 Cr, 1,8 bis 2,7 Ti, 1,0 bis 1,8 Al, ≤2,0 Co, ≤0,3 Mo, 0,0015 bis 0,005 B, 0,04 bis 0,1 Zr, Rest Ni aufweisen, die der als Nimonic 80A (Warenzeichen wie oben erwähnt) bezeichneten Legierung entspricht, oder sie kann auch die Zusammensetzung 0,05 C, ≤0,5 Si, ≤0,2 Cu, ≤1,0 Fe, ≤0,5 Mn, 29 bis 31 Cr, 1,5 bis 2 Ti, 0,7 bis 1,0 Al, ≤2,0 Co, ≤0,3 Mo, 0,0015 bis 0,0022 B, 0,05 bis 0,07 Zr, Rest Ni haben, die mit Nimonic 81 (ebenfalls Warenzeichen der Inco Alloys International Inc.) bezeichnet wird.

Hinsichtlich des Widerstandes gegen Korrosion haben beide Sitzpartielegierungen bessere Werte als die Legierung Nimonic 80A oder 81; vergleicht man die beiden Sitzpartielegierungen untereinander, so zeitigt die Legierung Inconel 625 bessere Werte als die Legierung Inconel 671.

Zum Aufbringen der Sitzpartielegierung auf den Grundkörper kommen verschiedene Methoden in Frage, so z.B. das Plasmaspritzen, das Auftragschweissen oder auch pulvermetallurgische Verfahren.

Ein besonders vorteilhaftes Verfahren zum Herstellen des erfindungsgemässen Auslassventils nach Anspruch 1 besteht darin, dass auf einem Grundkörper aus einer Nickelbasislegierung des Typs Nimonic 80A oder 81 (Warenzeichen) im Bereich der Sitzpartie eine Schicht aus einer Nickelbasislegierung des Typs Inconel 625 (Warenzeichen) durch Auftragschweissen aufgebracht wird, dass die Dicke der aufgetragenen Schicht danach durch Verformen verringert und die Schicht dadurch verfestigt wird und dass der so gebildete Ventilkörper anschliessend einer Glühbehandlung unterworfen wird.

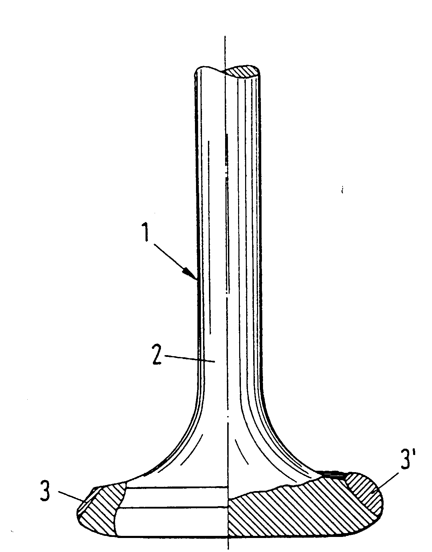

Ausführungsbeispiele der Erfindung werden in der folgenden Beschreibung anhand der Zeichnung näher erläutert, die eine Ansicht des Auslassventils zeigt, und zwar in der rechten Hälfte in einem Zwischenzustand und in der linken Hälfte im fertigen Zustand.

Gemäss der Zeichnung besteht das fertige Auslassventil 1 in Form eines Tellerventils einer Viertakt-Dieselbrennkraftmaschine aus einem Grundkörper 2 und einer mit diesem verbundenen Schicht 3, die die Sitzfläche des Tellerventils 1 bildet. Der Grundkörper 1 besteht aus der Nickelbasislegierung Nimonic 80A (Warenzeichen), die - abgesehen von herstellungsbedingten Verunreinigungen - folgende Zusammensetzung in Gewichtsprozenten aufweist: 0,04-0,10 C, ≤ 1,0 Si, ≤ 0,2 Cu, ≤ 1,0 Fe, ≤ 1,0 Mn, 18,0 - 21,0 Cr, 1,8 - 2,7 Ti, 1,0 - 1,8 Al, ≤ 2,0 Co, ≤ 0,3 Mo, 0,0015 - 0,005 B, 0,04 - 0,1 Zr und Rest Ni. Die Schicht 3 besteht aus der Nickelbasislegierung Inconel 625 (Warenzeichen), die - abgesehen von herstellungsbedingten Verunreinigungen - folgende Zusammensetzung in Gewichtsprozenten aufweist: ≤ 0,10 C, ≤ 0,5 Si, ≤ 5 Fe, ≤ 0,5 Mn, 21 Cr, ≤ 0,4 Ti, ≤ 0,4 Al, ≤ 1,0 Co, 9 Mo, 3,6 Nb + Ta und Rest Ni. Die Schicht 3 ist durch an sich bekanntes Auftragschweissen auf den Grundkörper 2 aufgebracht worden, und zwar in einer Dicke von 10 bis 12 mm (s. 3' in der rechten Hälfte des Ventils). Diese Schicht wurde dann durch Warmverformung in einem Walzprozess verfestigt, was die Härte der Schicht verbessert. Dabei beträgt der Verformungsgrad etwa 60%, bezogen auf das ursprünglich aufgetragene Volumen der Schicht 3'. Durch das Auftragschweissen entsteht eine Gussstruktur, die dendritisch angeordnete Karbide aufweist. Durch die Warmverformung wird die für eine Korrosion günstige Verteilung der Karbide homogenisiert, was den Korrosionsangriff verringert oder mit anderen Worten: den Korrosionswiderstand verbessert. Nach dem Warmverformen wurde das Ventil einer Glühbehandlung zwischen 550 und 650°C unterworfen. Nach dem Glühen erfolgte die Fertigbearbeitung der Sitzfläche durch Schleifen (s. 3 in der linken Hälfte des Ventils).

Abweichend von dem beschriebenen Ausführungsbeispiel ist es auch möglich, die Schicht 3 durch Plasmaspritzen auf den Grundkörper 2 aufzubringen. Anstelle des Warmverformens durch Walzen kann auch eine solche Verformung durch Schmieden erfolgen. Auch eine Kaltverformung der aufgebrachten Schicht ist möglich.

Bei Verwendung der Legierung Inconel 671 (Warenzeichen) für die Sitzpartie sind die Behandlungsschritte Verformen und Glühen nicht nötig.

## Patentansprüche

1. Auslassventil einer nach dem Dieselverfahren arbeitenden Hubkolbenbrennkraftmaschine, mit einem aus einer warmfesten Nickelbasislegierung bestehenden Grundkörper, der eine Sitzpartie aufweist, wobei die warmfeste Nickelbasislegierung des Grundkörpers - abgesehen von herstellungsbedingten Verunreinigungen - folgende Zusammensetzung in Gewichtsprozenten aufweist: 0,04 bis 0,10 C, ≤1,0 Si, ≤0,2 Cu, ≤1,0 Fe, ≤1,0 Mn, 18,0 bis 21,0 Cr, 1,8 bis 2,7 Ti, 1,0 bis 1,8 Al, ≤2,0 Co, ≤0,3 Mo, 0,0015 bis 0,005 B, 0,04 bis 0,1 Zr, Rest Ni oder: 0,05 C, ≤0,5 Si, ≤0,2 Cu, ≤1,0 Fe, ≤0,5 Mn, 29 bis 31 Cr, 1,5 bis 2 Ti, 0,7 bis 1,0 Al, ≤2,0 Co, ≤0,3 Mo, 0,0015 bis 0,0022 B, 0,05 bis 0,07 Zr, Rest Ni, dadurch gekennzeichnet, dass die Sitzpartie als mit dem Grundkörper verbundene Schicht aus einer anderen Nickelbasislegierung ausgebildet ist, die - abgesehen von herstellungsbedingten Verunreinigungen - folgende Zusammensetzung im Gewichtsprozenten aufweist: ≤0,10 C, ≤0,5 Si, ≤5 Fe, ≤0,5 Mn, 20 bis 22 Cr, ≤0,4 Ti, ≤0,4 A1, ≤1,0 Co, 8,0 bis 9,5 Mo, 3,15 bis 4,15 Nb+Ta, Rest Ni.

2. Auslassventil einer nach dem Dieselverfahren arbeitenden Hubkolbenbrennkraftmaschine, mit einem aus einer warmfesten Nickelbasislegierung bestehenden Grundkörper, der eine Sitzpartie aufweist, wobei die warmfeste Nickelbasislegierung des Grundkörpers - abgesehen von herstellungsbedingten Verunreinigungen - folgende Zusammensetzung in Gewichtsprozenten aufweist: 0,04 bis 0,10 C, ≤1,0 Si, ≤0,2 Cu, ≤1,0 Fe, ≤1,0 Mn, 18,0 bis 21,0 Cr, 1,8 bis 2,7 Ti, 1,0 bis 1,8 Al, ≤2,0 Co, ≤0,3 Mo, 0,0015 bis 0,005 B, 0,04 bis 0,1 Zr, Rest Ni oder: 0,05 C, ≤0,5 Si, ≤0,2 Cu, ≤1,0 Fe, ≤0,5 Mn, 29 bis 31 Cr, 1,5 bis 2 Ti, 0,7 bis 1,0 Al, ≤2,0 Co, ≤0,3 Mo, 0,0015 bis 0,0022 B, 0,05 bis 0,07 Zr, Rest Ni dadurch gekennzeichnet, dass die Sitzpartie als mit dem Grundkörper verbundene Schicht aus einer anderen Nickelbasislegierung ausgebildet ist, die - abgesehen von herstellungsbedingten Verunreinigungen - folgende Zusammensetzung in Gewichtsprozenten aufweist: 0,04 bis 0,05 C, 47 bis 49 Cr, 0,3 bis 0,40 Ti, Rest Ni.

3. Ventil nach Anspruch 1 oder 2, dadurch gekennzeichnet, dass die die Sitzpartie bildende Legierung durch Plasmaspritzen auf den Grundkörper aufgebracht ist.

4. Ventil nach Anspruch 1 oder 2, dadurch gekennzeichnet, dass die die Sitzpartie bildende Legierung durch Auftragschweissen auf den Grundkörper aufgebracht ist.

5. Ventil nach Anspruch 3 oder 4, dadurch gekennzeichnet, dass die die Sitzpartie bildende Legierung nach ihrem Aufbringen kaltverformt ist.

6. Ventil nach Anspruch 3 oder 4, dadurch gekennzeichnet, dass die die Sitzpartie bildende Legierung nach ihrem Aufbringen warmverformt ist.

7. Verfahren zum Herstellen eines Ventils nach Anspruch 1 oder 2, dadurch gekennzeichnet, dass auf einem Grundkörper aus einer warmfesten Nickelbasislegierung, wobei die warmfeste Nickelbasislegierung des Grundkörpers - abgesehen von herstellungsbedingten Verunreinigungen - folgende Zusammensetzung in Gewichtsprozenten aufweist: 0,04 bis 0,10 C, ≤1,0 Si, ≤0,2 Cu, ≤1,0 Fe, ≤1,0 Mn, 18,0 bis 21,0 Cr, 1,8 bis 2,7 Ti, 1,0 bis 1,8 Al, ≤2,0 Co, ≤0,3 Mo, 0,0015 bis 0,005 B, 0,04 bis 0,1 Zr, Rest Ni oder: 0,05 C, ≤0,5 Si, ≤0,2 Cu, ≤1,0 Fe, ≤0,5 Mn, 29 bis 31 Cr, 1,5 bis 2 Ti, 0,7 bis 1,0 Al, ≤2,0 Co, ≤0,3 Mo, 0,0015 bis 0,0022 B, 0,05 bis 0,07 Zr, Rest Ni, im Bereich der Sitzpartie eine Schicht aus der anderen Nickelbasislegierung, die -abgesehen von herstellungsbedingten Verumreinigungenfolgende Zusammensetzung im Gewichtsprozenten aufweist : ≤ 0,10 C, ≤ 0,5 Si, ≤5 Fe, ≤ 0,5 Mn, 20 bis 22 Cr, ≤ 0,4 Ti, ≤ 0,4 Al, ≤ 1,0 Co, 8,0 bis 9,5 Mo, 3,15 bis 4,15 Nb + Ta, Rest Ni, oder : 0,04 bis 0,05 C, 47 bis 49 Cr, 0,3 bis 0,40 Ti, Rest Ni, durch Auftragschweissen aufgebracht wird, dass die Dicke der aufgetragenen Schicht danach durch Verformen verringert und die Schicht dadurch verfestigt wird und dass der so gebildete Ventilkörper anschliessend einer Glühbehandlung unterworfen wird.

8. Verfahren nach Anspruch 7, dadurch gekennzeichnet, dass die Verformung der aufgetragenen Schicht im warmen Zustand erfolgt.

9. Verfahren nach Anspruch 7 oder 8, dadurch gekennzeichnet, dass das Verformen der Schicht durch Walzen erfolgt.

10. Verfahren nach Anspruch 7, dadurch gekennzeichnet, dass der Verformungsgrad zwischen 30% und 60 % des aufgetragenen Volumens beträgt.

11. Verfahren nach Anspruch 7, dadurch gekennzeichnet, dass die Glühbehandlung bei einer Temperatur zwischen 500 und 700°C erfolgt.

## Claims

1. Outlet valve of a reciprocating piston internal combustion engine operating in accordance with the Diesel process, the outlet valve comprising a base body consisting of a heat resistant nickel-based alloy having a seat portion, wherein the heat resistant nickel-based alloy of the base body has the following composition in percentage by weight - apart from impurities caused during manufacture: 0.04 to 0.10 C, ≤ 1.0 Si, ≤ 0.2 Cu, ≤ 1.0 Fe, ≤ 1.0 Mn, 18.0 to 21.0 Cr, 1.8 to 2.7 Ti, 1.0 to 1.8 Al, ≤ 2.0 Co, ≤ 0.3 Mo, 0.0015 to 0.005 B, 0.04 to 0.1 Zr, remainder Ni, or: 0.05 C, ≤ 0.5 Si, ≤ 0.2 Cu, ≤ 1.0 Fe, ≤ 0.5 Mn, 29 to 31 Cr, 1.5 to 2 Ti, 0.7 to 1.0 Al, ≤ 2.0 Co, ≤ 0.3 Mo, 0.0015 to 0.0022 B, 0.05 to 0.07 Zr, remainder Ni, characterized in that the seat portion is formed as a layer of another nickel-based alloy connected to the base body and having the following composition in percentage by weight - apart from impurities brought about by manufacturing: ≤ 0.10 C, ≤ 0.5 Si, ≤ 0.5 Fe, ≤ 0.5 Mn, 20 to 22 Cr, ≤ 0.4 Ti, ≤ 0.4 Al, ≤ 1.0 Co, 8.0 to 9.5 Mo, 3.15 to 4.15 Nb+Ta, remainder Ni.

2. Outlet valve of a reciprocating piston internal combustion engine operating in accordance with the Diesel process, the outlet valve comprising a base body consisting of a heat resistant nickel-based alloy having a seat portion wherein the heat resistant nickel-based alloy of the base body has the following composition in percentage by weight - apart from impurities caused during manufacture: 0.04 to 0.10 C, ≤ 1.0 Si, ≤ 0.2 Cu, ≤ 1.0 Fe, ≤ 1.0 Mn, 18.0 to 21.0 Cr, 1.8 to 2.7 Ti, 1.0 to 1.8 Al, ≤ 2.0 Co, ≤ 0.3 Mo, 0.0015 to 0.005 B, 0.04 to 0.1 Zr, remainder Ni, or: 0.05 C, ≤ 0.5 Si, ≤ 0.2 Cu, ≤ 1.0 Fe, ≤ 0.5 Mn, 29 to 31 Cr, 1.5 to 2 Ti, 0.7 to 1.0 Al, ≤ 2.0 Co, ≤ 0.3 Mo, 0.0015 to 0.0022 B, 0.05 to 0.07 Zr, remainder Ni, characterized in that the seat portion is formed of a layer of another nickel-based alloy connected to the base body and having the following composition - apart from impurities brought about by manufacture: 0.04 to 0.05 C, 47 to 49 Cr, 0.3 to 0.40 Ti, remainder Ni.

3. Valve in accordance with claim 1 or claim 2, characterized in that the alloy forming the seat portion is applied to the base body by plasma spraying.

4. Valve in accordance with claim 2 or claim 2, characterized in that the alloy forming the seat portion is applied to the base body by build-up welding.

5. Valve in accordance with claim 3 or claim 4, characterized in that the alloy forming the seat portion is subjected to cold deformation after its application.

6. Valve in accordance with claim 3 or claim 4, characterized in that the alloy forming the seat portion is subjected to hot deformation after its application.

7. Method for the manufacture of a valve in accordance with claim 1 or claim 2, characterized in that a layer of the other nickel base alloy which has the following composition in percent by weight - apart from impurities brought about during manufacture: ≤ 0.10 C, ≤ 0.5 Si, ≤ 5 Fe, ≤ 0.5 Mn, 20 to 22 Cr, ≤ 0.4 Ti, ≤ 0.4 Al, ≤ 1.0 Co, 8 to 9.5 Mo, 3.15 to 4.15 Nb + Ta, remainder Ni, or: 0.04 to 0.05 C, 47 to 49 Cr, 0.3 to 0.40 Ti, remainder Ni, is applied by build-up welding in the region of the seat portion on a base body of a heat resistant nickel base alloy, wherein the heat resistant nickel-based alloy of the base body has the following composition in percentage by weight - apart from impurities brought about during manufacture: 0.04 to 0.10 C, ≤ 1.0 Si, ≤ 0.2 Cu, ≤ 1.0 Fe, ≤ 1.0 Mn, 18.0 to 21.0 Cr, 1.8 to 2.7 Ti, 1.0 to 1.8 Al, ≤ 2.0 Co, ≤ 0.3 Mo, 0.0015 to 0.005 B, 0.04 to 0.1 Zr, remainder Ni, or: 0.05 C, ≤ 0.5 Si, ≤ 0.2 Cu, ≤ 1.0 Fe, ≤ 0.5 Mn, 29 to 31 Cr, 1.5 to 2 Ti, 0.7 to 1.0 Al, ≤ 2.0 Co, ≤ 0.3 Mo, 0.0015 to 0.0022 B, 0.05 to 0.07 Zr, remainder Ni, characterized in that the thickness of the applied layer is then reduced by deformation and the layer thereby consolidated and in that the so formed valve body is subsequently subjected to an annealing treatment.

8. Method in accordance with claim 7, characterized in that the deformation of the deposited layer takes place in the hot state.

9. Method in accordance with claim 7 or claim 8, characterized in that the deformation of the layer takes place by rolling.

10. Method in accordance with claim 7, characterized in that the degree of deformation amounts to between 30 % and 60 % of the deposited volume.

11. Method in accordance with claim 7, characterized in that the annealing treatment takes place at a temperature between 500 and 700°C.

## Revendications

1. Soupape d'échappement pour un moteur à combustion interne à piston alternatif de type Diesel, avec un corps de base consistant en un alliage à base de nickel, résistant à la chaleur, qui présente une partie constituant le siège, dans laquelle l'alliage à base de nickel, résistant à la chaleur, - indépendamment des impuretés dues à la fabrication - présente la composition suivante en pourcentage: 0,04 à 0,10 C, ≤ 1,0 Si, ≤ 0,2 Cu, ≤ 1,0 Fe, ≤ 1,0 Mn, 18,0 à 21,0 Cr, 1,8 à 2,7 Ti, 1,0 à 1,8 Al, ≤ 2,0 Co, ≤ 0,3 Mo, 0,0015 à 0,005 B, 0,04 à 0,1 Zr, et pour le reste du nickel ou présente la composition suivante en pourcentage: 0,05 C, ≤ 0,5 Si, ≤ 0,2 Cu, ≤ 1,0 Fe, ≤ 0,5 Mn, 29 à 31 Cr, 1,5 à 2 Ti, 0,7 à 1,0 Al, ≤ 2,0 Co, ≤ 0,3 Mo, 0,0015 à 0,0022 B, 0,05 à 0,07 Zr et pour le reste du Nickel, soupape d'échappement caractérisée en ce que la partie qui constitue le siège est formée par une couche reliée au corps de base se composant d'un autre alliage à base de nickel, qui - indépendamment des impuretés dues à la fabrication - présente la composition suivante en pourcentages de poids : ≤ 0,10 C, ≤ 0,5 Si, ≤ 5 Fe, ≤ 0,5 Mn, 20 à 22 Cr, ≤ 0,4 Ti, ≤ 0,4 Al, ≤ 1,0 Co, 8,0 à 9,5 Mo, 3,15 à 4,15 Nb+Ta et pour le reste du nickel.

2. Soupape d'échappement pour un moteur à combustion interne à piston alternatif de type Diesel, avec un corps de base consistant en un alliage à base de nickel, résistant à la chaleur, qui présente une partie constituant le siège, dans laquelle l'alliage à base de nickel, résistant à la chaleur, - indépendamment des impuretés dues à la fabrication - présente la composition suivante en pourcentage: 0,04 à 0,10 C, ≤ 1,0 Si, ≤ 0,2 Cu, ≤ 1,0 Fe, ≤1,0 Mn, 18,0 à 21,0 Cr, 1,8 à 2,7 Ti, 1,0 à 1,8 Al, ≤ 2,0 Co, ≤ 0,3 Mo, 0,0015 à 0,005 B, 0,04 à 0,1 Zr, et pour le reste du nickel ou présente la composition suivante en pourcentage: 0,05 C, ≤ 0,5 Si, ≤ 0,2 Cu, ≤ 1,0 Fe, ≤ 0,5 Mn, 29 à 31 Cr, 1,5 à 2 Ti, 0,7 à 1,0 Al, ≤ 2,0 Co, ≤ 0,3 Mo, 0,0015 à 0,0022 B, 0,05 à 0,07 Zr et pour le reste du Nickel, soupape d'échappement caractérisée en ce que la partie qui constitue le siège est formée par une couche reliée au corps de base se composant d'un autre alliage à base de nickel, qui - indépendamment des impuretés dues à la fabrication - présente la composition suivante en pourcentages de poids : 0,04 à 0,05 C, 47 à 49 Cr, 0,3 à 0,40 Ti et pour le reste du nickel.

3. Soupape selon la revendication 1 ou 2, caractérisée en ce que l'alliage qui constitue la partie qui forme le siège est déposé par projection au plasma sur le corps de base.

4. Soupape selon la revendication 1 ou 2, caractérisée en ce que l'alliage qui constitue la partie qui forme le siège est déposé par chargement par soudure sur le corps de base.

5. Soupape selon la revendication 3 ou 4, caractérisée en ce que l'alliage qui constitue la partie qui forme le siège est déformée à froid après son dépôt.

6. Soupape selon la revendication 3 ou 4, caractérisée en ce que l'alliage qui constitue la partie qui forme le siège est déformée à chaud après son dépôt.

7. Procédé de fabrication d'une soupape selon la revendication 1 ou 2, caractérisé en ce que l'on dépose par chargement par soudure sur un corps de base réalisé en un alliage à base de nickel, résistant à la chaleur, qui - indépenamment des impuretés dues à la fabrication - présente la composition suivante en pourcentage : 0,04 à 0,10 C, ≤ 1,0 Si, ≤ 0,2 Cu, ≤ 1,0 Fe, ≤ 1,0 Mn, 18,0 à 21,0 Cr, 1,8 à 2,7 Ti, 1,0 à 1,8 Al, ≤ 2,0 Co, ≤ 0,3 Mo, 0,0015 à 0,005 B, 0,04 à 0,1 Zr, et pour le reste du nickel ou présente la composition suivante en pourcentage : 0,05 C, ≤ 0,5 Si, ≤0,2 Cu, ≤ 1,0 Fe, ≤ 0,5 Mn, 29 à 31 Cr, 1,5 à 2 Ti, 0,7 à 1,0 Al, ≤ 2,0 Co, ≤ 0,3 Mo, 0,0015 à 0,0022 B, 0,05 à 0,07 zr et pour le reste du Nickel, dans la zone de la partie qui forme le siège une couche constituée en un autre alliage à base de nickel qui - indépendamment des impuretés dues à la fabrication - a la composition suivante en pourcentages de poids : ≤ 0,10 C, ≤ 0,5 Si, ≤ 5 Fe, ≤ 0,5 Mn, 20 à 22 Cr, ≤0,4 Ti 0,4 Al, ≤ 1,0 Co, 8,0 à 9,5 Mo, 3,15 à 4,15 Nb+Ta, et pour le reste du nickel, ou la composition suivante en pourcentage: 0,04 à 0,05 C, 47 à 49 Cr, 0,3 à 0,4 Ti et pour le reste du nickel , en ce que l'épaisseur de la couche déposée est réduite ensuite par mise en forme et en ce que la couche est de cette façon durcie et en ce que le corps de soupape ainsi constitué est ensuite soumis à un traitement de recuit.

8. Procédé selon la revendication 7, caractérisé en ce que la mise en forme de la couche déposée a lieu à chaud.

9. Procédé selon la revendication 7 ou 8, caractérisé en ce que la mise en forme de la couche a lieu par laminage

10. Procédé selon la revendication 7, caractérisé en ce que le degré de déformation atteint 30 à 60% du volume chargé.

11. Procédé selon la revendication 7, caractérisé en ce que le traitement de recuit a lieu à une température comprise entre 500 et 700°C.
